# DEMANDE DE BREVET EUROPEEN

(11) **EP 0 771 992 A1**
(43) Date de publication de la demande: **07.05.1997**
(21) Numéro de dépôt: 96402221.4
(22) Date de dépôt: 17.10.1996
(51) Int. Cl.: F16L 55/033, F16L 11/15

(54) **Tuyau métallique ployable muni d'un segment extérieur rapporté absorbant les vibrations sonores**

(30) Priorité: 31.10.1995 FR 9512885
(71) Demandeur: GROUPEMENT D'INTERET ECONOMIQUE GAZINOX, 75017 Paris (FR)
(72) Inventeur: Bellan, Gérard André, 75018 Paris (FR); Peronne, Michel Jean Gaston, 92000 Nanterre (Hauts de Seine) (FR)
(74) Mandataire: Rataboul, Michel Charles

(57) **Abrégé**

Le tuyau métallique est à paroi onduleuse, c'est-à-dire qu'il présente des parties onduleuses de plus grand diamètre et des parties onduleuses de plus petit diamètre, et est flexible transversalement, indifféremment extensible ou pas, destiné au transport de fluides sous pression et muni de raccords d'extrémité.

Le tuyau est caractérisé en ce qu'il est muni d'un segment extérieur indépendant rapporté non métallique (2 à 9), qui forme bague sur au moins une partie substantielle de sa périphérie, qui est appliqué sur le tuyau (1) qu'il enserre, indifféremment par ses parties onduleuses de plus grand diamètre ou par ses parties onduleuses de plus petit diamètre, et qui comporte des moyens assurant un contact permanent entre le tuyau (1) et lui.

## Description

Il existe de très nombreux cas dans lesquels un tuyau réunit deux éléments susceptibles de mouvements relatifs.

Dans ce cas, il est indispensable d'utiliser des tuyaux ployables qui autorisent ces mouvements relatifs, comme c'est le cas, par exemple, entre un radiateur et un moteur de véhicule.

Le plus simple moyen connu consiste à réaliser le tuyau dans un matériau qui est par nature ployable, élastique, sans pour autant se déformer radialement, ce qui pourrait diminuer la section de passage et, donc, altérer la circulation du fluide transporté.

Les tuyaux de ce type connus sous le nom déposé de "DURITE" ont pour inconvénient d'être inflammables, de sorte que l'on ne peut pas les utiliser pour tous besoins.

Pour les applications domestiques, on utilise des tuyaux en caoutchouc ou en matières synthétiques mais selon les normes européenne, ces tuyaux deviennent impropres aux usages ménagers, précisément en raison de leur inflammabilité.

Un autre moyen plus élaboré, consiste à utiliser des tuyaux métalliques dont la paroi est onduleuse afin d'être ployable mais non écrasable.

Or, le remplacement systématique des tuyaux en élastomère par des tuyaux métalliques ployables se heurte à des difficultés dont la principale est que la géométrie même des parois onduleuses, provoque l'émission de bruits extrêmement pénibles provenant de l'existence d'ondes stationnaires de caractère vibratoire quand le tuyau est en fonction avec certains fluides tels que de l'eau ou du gaz sous pression.

En effet, les ondulations de la paroi interne du tuyau constituent autant d'élargissements et de rétrécissements alternés de la section offerte au passage du fluide, ce qui génère des turbulences de ce dernier.

Ces turbulences sont la source de vibrations, notamment de fréquences sonores, dont la propagation est favorisée par la nature métallique du tuyau.

Ces phénomènes sont connus des acousticiens et jusqu'à maintenant ne présentent pas d'inconvénient majeur au plan industriel et commercial car ces tuyaux sont essentiellement utilisés pour des applications spécifiques telles que la conduite de gaz à forte température, comme les gaz d'échappement des moteurs à combustion interne.

Ce n'est plus le cas si l'on doit généraliser l'emploi de tuyaux métalliques ployables, notamment dans les applications domestiques, en raison des garanties de sécurité qu'ils apportent.

En particulier, ces phénomènes vibratoires sonores se manifestent surtout lorsque les tuyaux sont utilisés à des usages hydrauliques et plus généralement pour le transport des fluides ayant un coefficient de viscosité du même ordre de grandeur que celui de l'eau.

Pour situer l'Etat de la Technique, on peut citer les documents suivants :
- Le brevet US-A-3 514 600 qui décrit un conduit métallique formé d'anneaux susceptibles de mouvements axiaux et non de mouvements angulaires puisqu'ils sont tous bloqués par des entretoises ("spacing means"), alors que c'est cette seule mobilité angulaire qui donne la flexibilité.

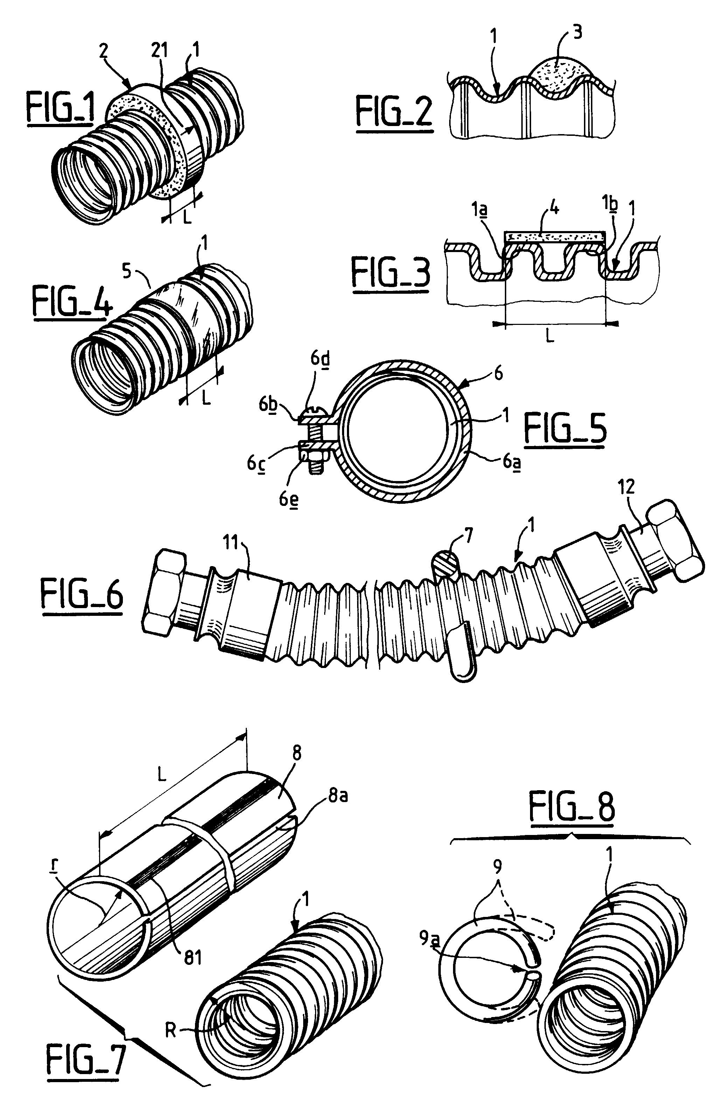

Il ne s'agit donc pas d'un conduit flexible, comme on en a la preuve par la simple observation du dessin qui montre clairement que le conduit 20 est, et ne peut être que, rectiligne puisqu'il est raccordé à un coude rigide 16 (figure 1 et figure 2).

Si le conduit 20 était flexible, il serait raccordé directement à l'entrée 16a de la chambre 10e.

En fait, le conduit 20 est un simple amortisseur élastique, à effet télescopique, entre la pompe 30 vibrante et le microscope électronique stable. De ce seul point de vue, le conduit 20 pourrait, par conséquent, être flexible et notamment en élastomère. Mais, comme son intérieur est soumis au vide, on doit le réaliser en métal qui ne fléchit pas et qui a des caractéristiques physico-chimiques aptes au contact avec le vide.

Ayant ainsi réglé le problème de la rigidité radiale, il faut conserver la déformabilité axiale, ce qui est obtenu par la mobilité relative des anneaux.

Pour ces trois raisons : rigidité radiale (non flexibilité), mobilité axiale et compatibilité au vide, le conduit doit être métallique.

Or, le métal est hautement transmetteur des vibrations qu'il reçoit d'un appareil vibrant (ici, la pompe 30), et la nécessité de la mobilité axiale des anneaux a pour conséquence néfaste qu'ils peuvent entrer en contact les uns avec les autres.

Si les anneaux transmettent les vibrations de la pompe 30 et en plus peuvent se choquer, on réalise un ensemble tout simplement inutilisable.

D'où l'invention qui prévoit alors de placer des entretoises ("spacing means") entre tous les anneaux (colonne 3, lignes 6-7) en vue d'empêcher les chocs métal contre métal des anneaux entre eux, ce qui les bloque angulairement et ôte toute flexibilité au conduit.

Il faut également remarquer que le problème de vibrations que cette invention se propose de résoudre est celui qui existe lorsque le conduit est relié par une de ses extrémités à un mécanisme générateur de vibrations, afin que celles-ci prenant naissance à l'une des extrémités du conduit ne soient pas transmises à l'autre extrémité et, par là, au dispositif (microscope électronique 10) relié au mécanisme (pompe 30).

On ne retrouve pas dans ce document le problème que présente la présente invention, à savoir la suppression, et au minimum l'atténuation des vibrations générées par un conduit flexible et de longueur indifféremment variable ou pas, lorsqu'il est parcouru par un fluide sous pression.
- Le brevet CH-A-502 546 qui concerne le repérage de tuyaux au moyen d'étiquettes placées autour d'eux, sous forme de bagues.
- Le document EP-A-0 280 404 qui concerne des tuyaux lisses et rigides (non flexibles), susceptibles de transmettre des vibrations générées par des appareils mécaniques auxquels ces tuyaux sont assujettis.

Comme pour le brevet US-A-3 514 600, il s'agit donc d'un autre problème que celui de la présente invention, raison pour laquelle la solution proposée est également différente : il s'agit d'envelopper un tuyau au moyen d'un matériau rétractable par la chaleur (page 3, lignes 19-23) et disposé selon au moins une couche s'étendant sur une longueur importante du tuyau (page 5, lignes 8-9).
- Le brevet US-H-H1317 qui décrit un dispositif applicable à des tuyaux lisses et rigides (indéformables, non flexibles) et consistant en des bracelets métalliques rigides et calibrés, agissant par "pincement" des tuyaux (colonne 2, lignes 22-25) et appliquant contre eux une cavité remplie d'un matériau atténuateur de vibrations.

Il est clair que cette solution serait inapplicable à des tuyaux annelés, n'offrant aucune surface étendue et continue à celle des bracelets.

En effet, le matériau atténuateur de vibrations s'enfoncerait dans les intervalles entre anneaux et serait très mal appliqué contre les anneaux.

A noter que contrairement à la présente invention, ce document prévoit l'emploi de parties métalliques : couche 36, intercalée entre le tuyau équipé et le bracelet de compression (figures 2-5 et colonne 3, lignes 14-17 et lignes 26-29).

D'une manière générale, on remarque que tous les documents ci-dessus font allusion à des vibrations qui, non seulement sont générées par des appareils distincts des conduits, mais qui sont de toutes fréquences, car il s'agit de protéger des installations contre l'agression mécanique des vibrations quelles qu'elles soient. Cela est particulièrement net pour le brevet US-A-3.514.600.

L'invention, au contraire, s'applique à empêcher la naissance des vibrations issues du conduit lui-même, non pour protéger des appareils (puisqu'il peut ne pas y en avoir) mais pour éviter l'émission de bruits, c'est-à-dire de vibrations de fréquence sonore.

Aucun des documents connus cités plus haut ne traite le problème spécifique des conduits métalliques et flexibles formés d'anneaux juxtaposés axialement, extensibles ou pas, et destinés au transport de fluides sous pression.

C'est, en effet, la structure même de ces tuyaux qui est à l'origine de vibrations, du fait que le fluide sous pression qui circule à l'intérieur ne peut pas s'écouler linéairement, les parois onduleuses du tuyau provoquant des turbulences.

Ces tuyaux ont toutes sortes d'applications, y compris losqu'ils servent à la jonction de conduites qui ne sont pas reliées à des appareils, soit vibrants, soit vulnérables aux vibrations. C'est le cas, par exemple, de la distribution de gaz ou d'eau à partir d'un réseau central ou d'un générateur tel qu'une chaudière.

Il faut rappeler que, de toutes façons, il s'agit de tuyaux courts, individuels, munis de raccords d'extrémité, et non d'installations de tuyauteries en ensembles complexes de circuits.

A ce problème, la présente invention propose une solution originale, non anticipée par les documents cités connus, à savoir la mise en place autour du tuyau, indifféremment dans ou sur les ondulations, d'une bague de longueur faible en regard de celle du tuyau.

Cette solution n'est décrite dans aucun des documents cités car ceux-ci ne traitent pas du problème des vibrations générées par le tuyau court lui-même, mais de la propagation dans un système complexe de tuyauteries, des vibrations issues de machines.

A plus forte raison ne retrouve-t-on pas dans les documents antérieurs la solution à ce problème, qui ne peut pas être un simple barrage à des vibrations induites au conduit depuis l'une de ses extrémités.

La présente invention apporte une solution simple et efficace à ce problème en s'opposant à la naissance des vibrations de fréquences sonores, de sorte que l'on rend possible l'application généralisée des tuyaux métalliques à paroi onduleuse partout où les normes de sécurité interdisent l'emploi de tuyaux flexibles en élastomères.

A cette fin l'invention a pour objet un tuyau métallique à paroi onduleuse, c'est-à-dire présentant des parties onduleuses de plus grand diamètre et des parties onduleuses de plus petit diamètre, flexible transversalement, indifféremment extensible ou pas, destiné au transport de fluides sous pression et muni de raccords d'extrémité, caractérisé en ce qu'il est muni d'un segment extérieur indépendant rapporté non métallique, qui forme bague sur au moins une partie substantielle de sa périphérie, qui est appliqué sur le tuyau qu'il enserre, indifféremment par ses parties onduleuses de plus grand diamètre ou par ses parties onduleuses de plus petit diamètre, et qui comporte des moyens assurant un contact permanent entre le tuyau et lui.

Selon d'autres caractéristiques de l'invention :
- le segment extérieur rapporté est en un matériau élastique et a un pourtour intérieur selon un rayon de courbure inférieur à celui des parties onduleuses de plus grand diamètre formant le tuyau, sa mise en place se faisant par sa déformation élastique;
- le segment extérieur rapporté est en un matériau qui est thermoformé en place et qui adhère au tuyau;
- le segment extérieur rapporté est fixé au tuyau par un adhésif;
- le segment extérieur rapporté est en un matériau non élastique, mais non métallique, et est muni de moyens de serrage;
- le segment extérieur rapporté est fait en un matériau non métallique, qui est par nature amortisseur de vibrations;
- le segment extérieur rapporté est situé entre les raccords que ce tuyau possède à ses deux extrémités en vue de son montage entre une conduite et appareil;
- le segment extérieur rapporté est un manchon coupé sur toute sa longueur, laquelle est minimum par rapport à la longueur du tuyau;
- le segment extérieur rapporté est un anneau coupé;
- le segment extérieur rapporté porte un code significatif d'une ou plusieurs caractéristiques du tuyau et/ou du fluide passant dans ledit tuyau;
- le code consiste en une ou plusieurs couleurs;
- le code consiste en une ou plusieurs mentions en lettres et/ou en chiffres.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique partielle en perspective montrant une portion de tuyau conforme à l'invention portant un segment extérieur en matériau élastique.

La figure 2 est une vue schématique partielle en coupe longitudinale montrant une portion de tuyau conforme à l'invention portant un segment extérieur rapporté par thermoformage.

La figure 3 est une vue schématique partielle en coupe longitudinale montrant une portion de tuyau conforme à l'invention portant un segment extérieur rapporté et fixé par collage.

La figure 4 est une vue schématique partielle en perspective montrant une portion de tuyau conforme à l'invention portant un segment extérieur constitué par un ruban adhésif.

La figure 5 est une vue schématique en coupe d'un tuyau conforme à l'invention portant un segment extérieur muni de moyens de serrage.

La figure 6 est une vue schématique en perspective d'un tuyau conforme à l'invention possédant un raccord à chacune de ses deux extrémités et portant un segment extérieur torique.

La figure 7 est une vue schématique en perspective montrant une portion de tuyau conforme à l'invention destiné à recevoir un segment extérieur ayant la forme d'un tube coupé sur toute sa longueur et dont le diamètre intérieur est inférieur au diamètre extérieur du tuyau.

La figure 8 est une vue schématique en perspective montrant une portion de tuyau conforme à l'invention destiné à recevoir un segment extérieur ayant la forme d'un anneau coupé dont le diamètre intérieur est inférieur au diamètre extérieur du tuyau.

En se reportant à la figure 1, on voit une portion de tuyau 1 en métal, formé par enroulement en spirale d'un feuillard et soudage des spires jointives.

Cela n'est qu'un exemple retenu pour la présente description car un tuyau à paroi onduleuse peut aussi être fabriqué par formage mécanique ou hydraulique, à partir d'un tube soudé longitudinalement.

Un tel tuyau peut aussi être formé par des anneaux assemblés, en aluminium, en acier, en acier inoxydable, etc.

Sur le tuyau se trouve un segment extérieur 2 en élastomère ou autre matériau formant une bague circulaire continue, propre à absorber les vibrations du tuyau métallique 1 générées par le passage d'un fluide sous pression, notamment de l'eau.

Le segment 2 est un manchon cylindrique dont la longueur L est faible pour faciliter sa mise en place en l'engageant sur le tuyau 1 par une extrémité de celui-ci.

Son diamètre intérieur est un peu inférieur au diamètre extérieur du tuyau 1 afin qu'une fois mis en place il exerce en permanence un effort de serrage radial sur le tuyau 1 du fait qu'étant réalisé en un matériau élastique, il tend constamment à reprendre sa forme et ses dimensions initiales.

Grâce à ces moyens, on est assuré que le segment extérieur 2 sera toujours au contact du tuyau 1.

La position du segment extérieur 2 le long du tuyau 1 est en principe quelconque, y compris au contact d'une extrémité (souvent munie d'un raccord) toutefois, dans certaines circonstances, les vibrations peuvent engendrer un régime d'ondes stationnaires qui parcourent la longueur du tuyau 1 d'une extrémité à l'autre. Dans ce cas, la position du segment extérieur 2 le long du tuyau peut ne pas être indifférente et montrer une plus grande efficacité en certains points.

Le segment extérieur 2 enserre le tuyau 1 et empêche que les trains d'ondes vibratoires du tuyau se propagent, ce qui évite leur entrée en résonnance et l'émission corrélative de sons.

Si le segment extérieur 2 était simplement placé librement autour du tuyau, il n'y aurait pas continuité entre le tuyau 1 et le segment 2, de sorte que l'absorption des vibrations serait incomplète, voire nulle.

Un matériau mou est bien adapté à la réalisation du segment extérieur 2 conforme à l'invention, surtout s'il est élastique, car un tel matériau est très efficace pour amortir ou absorber les vibrations et se met facilement en place autour d'un tuyau à paroi onduleuse et comporte en propre la faculté de développer un effort de serrage radial permanent, garant d'un bon contact permanent.

Sur la figure 2 on voit une variante de réalisation de l'invention selon laquelle le contact permanent avec le tuyau 1 est assuré du fait qu'il reçoit un segment extérieur 3 qui est thermoformé au moyen d'une résine synthétique durcissable.

Le moulage sous pression de la résine garantit que celle-ci s'applique sur la surface du tuyau 1 en prenant sa forme et en y adhérant fortement.

Sur la figure 3, on voit une autre variante de réalisation de l'invention selon laquelle le tuyau 1 reçoit un segment extérieur formé d'un anneau 4 assez plat et collé sur deux ondes voisines 1a et 1b du tuyau 1.

Cette solution est possible lorsque les ondes du tuyau 1 offrent une surface annulaire plane au collage, car le contact permanent entre le tuyau 1 et l'anneau 4 est assuré si le collage est assez énergique pour immobiliser l'anneau 4 malgré les vibrations.

Si la surface annulaire offerte au collage est petite, notamment en raison de la forme extérieure des ondes constituant le tuyau 1, il faut que la longueur L de l'anneau 4 soit plus grande pour que la surface de contact totale ait une valeur convenable, la petite surface annulaire de chaque onde étant compensée par un nombre plus grand d'ondes.

Sur la figure 4, on voit une autre variante selon laquelle le segment extérieur est formé par un ruban 5 portant son propre adhésif, de sorte qu'en l'appliquant sur le tuyau 1, on réalise simultanément sa mise en place et sa fixation.

La longueur L du segment peut être égale à la largeur du ruban 5 si celui-ci est placé selon une seule épaisseur ou si ce ruban 5 est disposé en plusieurs couches annulaires, comme cela est représenté sur la figure 4.

On peut aussi disposer le ruban 5 en lui faisant faire plusieurs tours en spirale plus ou moins étendue.

Avec les modes de réalisation décrits et représentés ci-dessus, on utilise toujours des segments extérieurs élastiques ou collés. Mais on peut également utiliser un matériau plus dur, non métallique, s'il comporte des moyens de serrage.

Un exemple de ce mode de réalisation de l'invention est représenté sur la figure 5 où l'on voit que le tuyau 1 est enserré par un segment extérieur 6 relativement rigide mais néanmoins en un matériau absorbant les vibrations, comprenant une partie courbe 6a dont les deux extrémités sont conformées en pattes 6b et 6c traversées de trous situés en regard et traversés par une vis 6d en prise avec un écrou 6e.

Ce segment 6 est enfilé sur le tuyau 1 alors que la vis 6d n'est pas engagée dans les trous des pattes 6b et 6c, puis lorsqu'il est à sa place, on engage la vis 6d que l'on bloque avec l'écrou 6e, ce qui rapproche les pattes 6b et 6c et resserre en la cintrant la partie courbe 6a.

Le segment 6 est ainsi bloqué à sa place et exerce sur le tuyau 1 un effort de serrage radial assurant un contact permanent entre le tuyau 1 et le segment 6.

On remarque que les segments extérieurs 2, 3, 4, 5 et 6 sont totalement indépendants et ne font partie d'aucun dispositif annexe tel que bride, collier de fixation ou autre. Ils sont rapportés et ont pour seule fonction physique d'absorber les vibrations.

En se reportant à la figure 6, on voit un tuyau 1 qui est muni de raccords 11 et 12 à ses deux extrémités afin de pouvoir être assujetti de manière amovible à une arrivée et à un départ de fluide.

Cela peut être le cas d'un tuyau participant au circuit d'eau d'une chaudière de chauffage mais un tel tuyau a de multiples applications différentes.

Le tuyau reçoit un segment extérieur 7 formé par une bague torique en caoutchouc ou en matière plastique.

S'il est continu, le segment extérieur 7 doit être engagé sur le tuyau 1 avant que l'on y fixe les raccords 11 et 12 alors que s'il est coupé, on peut le mettre en place sur le tuyau 1 même si les extrémités de celui-ci sont munies de raccords ou, mieux encore, raccordées et donc inaccessibles.

Sur la figure 7, on voit l'exemple d'un segment extérieur formé par une gaine extérieure 8 fendue sur toute sa longueur par une entaille 8a dont les lèvres peuvent être plus ou moins écartées pour permettre la mise en place de la gaine 8 sur un tuyau 1 sans démonter ce dernier s'il est raccordé.

La gaine 8 doit avoir suffisamment de "nerf" pour enserrer le tuyau 1 en y exerçant un minimum d'effort de serrage radial pour assurer le contact permanent entre elle et le tuyau 1.

Sa longueur L est quelconque car la gaine 8 peut avoir sensiblement la même longueur que le tuyau 1, étant toutefois rappelé que la résistance au feu étant un critère essentiel pour l'emploi des tuyaux métalliques ployables, il serait paradoxal de les recouvrir d'une gaine inflammable.

Il est donc recommandé de réaliser le segment extérieur rapporté sous forme d'une bague de longueur L minimum si le matériau qui la constitue est de nature inflammable car en cas d'incendie, le pire qui puisse arriver est la destruction du segment extérieur, le tuyau étant par nature résistant au feu.

Le rayon r intérieur à la gaine 8 est inférieur au rayon R extérieur au tuyau 1, afin qu'après mise en place, la gaine 8 ait tendance à se resserrer, ce qui l'immobilise et développe sur le tuyau 1 un effort de serrage radial.

Sur la figure 8, on voit un segment extérieur rapporté constitué par un anneau torique 9 en matériau élastique et coupé par une fente 9a, ce qui l'autorise à s'ouvrir élastiquement jusqu'à une position évoquée en trait pointillé, permettant aux lèvres de la fente 9a d'être suffisamment écartées pour passer par-dessus le tuyau 1, sans démonter celui-ci lorsque ses extrémités sont raccordées et, donc, inaccessibles.

Comme expliqué plus haut, la position du segment extérieur (2 à 9) le long du tuyau 1 est en principe quelconque, y compris au contact d'une extrémité munie d'un raccord 11-12 bien que, dans ce cas, la position du segment extérieur (2 à 9) le long du tuyau 1 peut ne pas être indifférente et montrer une plus grande efficacité en certains points.

L'effort de serrage sur le tuyau doit être suffisant pour immobiliser le segment extérieur rapporté et assurer un contact efficace entre lui et le tuyau mais suffisamment doux pour ne pas risquer un écrasement du tuyau.

Le (ou les) segment extérieur rapporté peut servir à l'emploi d'un code significatif.

Il peut s'agir, par exemple, d'utiliser des segments extérieurs de différentes couleurs pour caractériser le tuyau ou le fluide qui le parcourt : bleu clair pour de l'eau potable, marron pour de l'eau usée, rouge pour de la vapeur, bleu vif pour du gaz inflammable, etc.

Le segment extérieur rapporté peut aussi porter des mentions en clair ou en codes, formées de lettres et/ou de chiffres, ou bien encore des symboles utiles à l'usage du tuyau.

Sur la figure 1, on voit que le segment 2 porte une flèche 21 indiquant le sens dans lequel circule le fluide.

Sur la figure 7, on voit que la gaine 8 porte une bande de couleur 81 caractérisant le fluide en circulation.

## Revendications

1. Tuyau métallique à paroi onduleuse, c'est-à-dire présentant des parties onduleuses de plus grand diamètre et des parties onduleuses de plus petit diamètre, flexible transversalement, indifféremment extensible ou pas, destiné au transport de fluides sous pression et muni de raccords d'extrémité, caractérisé en ce qu'il est muni d'un segment extérieur indépendant rapporté non métallique (2 à 9), qui forme bague sur au moins une partie substantielle de sa périphérie, qui est appliqué sur le tuyau (1) qu'il enserre, indifféremment par ses parties onduleuses de plus grand diamètre ou par ses parties onduleuses de plus petit diamètre, et qui comporte des moyens assurant un contact permanent entre le tuyau (1) et lui.

2. Tuyau selon la revendication 1, caractérisé en ce que le segment extérieur rapporté (2, 7, 8, 9) est en un matériau élastique et a un pourtour intérieur selon un rayon de courbure (r) inférieur à celui (R) des parties onduleuses de plus grand diamètre formant le tuyau (1), sa mise en place se faisant par sa déformation élastique.

3. Tuyau selon la revendication 1, caractérisé en ce que le segment extérieur rapporté (3) est en un matériau qui est thermoformé en place et qui adhère au tuyau (1).

4. Tuyau selon la revendication 1, caractérisé en ce que le segment extérieur rapporté (4, 5) est fixé au tuyau (1) par un adhésif.

5. Tuyau selon la revendication 1, caractérisé en ce que le segment extérieur rapporté (6) est en un matériau non élastique, mais non métallique, et est muni de moyens de serrage (6b à 6e).

6. Tuyau selon la revendication 1, caractérisé en ce que le segment extérieur rapporté (2 à 9) est fait en un matériau non métallique, qui est par nature amortisseur de vibrations.

7. Tuyau selon la revendication 1, caractérisé en ce que le segment extérieur rapporté (7) est situé entre les raccords (11 et 12) que ce tuyau possède à ses deux extrémités en vue de son montage entre une conduite et appareil.

8. Tuyau selon la revendication 1, caractérisé en ce que le segment extérieur rapporté est un manchon (8) coupé sur toute sa longueur (L), laquelle est minimum par rapport à la longueur du tuyau.

9. Tuyau selon la revendication 1, caractérisé en ce que le segment extérieur rapporté est un anneau coupé (9).

10. Tuyau selon la revendication 1, caractérisé en ce que le segment extérieur rapporté porte un code (21-81) significatif d'une ou plusieurs caractéristiques du tuyau (1) et/ou du fluide passant dans ledit tuyau (1).

11. Tuyau selon la revendication 10, caractérisé en ce que le code consiste en une ou plusieurs couleurs.

12. Tuyau selon la revendication 10, caractérisé en ce que le code consiste en une ou plusieurs mentions en lettres et/ou en chiffres.
